# DEMANDE DE BREVET EUROPEEN

(11) **EP 4 534 438 A1**
(43) Date de publication de la demande: **09.04.2025**
(21) Numéro de dépôt: 24203712.5
(22) Date de dépôt: 30.09.2024
(51) Int. Cl.: B65D 50/04, H01R 13/52, H01R 13/639, G02B 6/38

(54) **BOUCHON DE SÉCURITÉ ET PROCÉDÉS D'OUVERTURE ET DE SÉCURISATION DU BOUCHON DE SÉCURITÉ**

(30) Priorité: 04.10.2023 FR 2310570
(71) Demandeur: Amphenol Socapex, 74311 Thyez Cedex (FR)
(72) Inventeur: FALCOZ, Steven, 74300 Thyez (FR); RINSANT, Matthieu, 74300 Thyez (FR); MEURICE, Nicolas, 74300 Thyez (FR); BERNARDI, Christophe, 74300 Thyez (FR)
(74) Mandataire: Cabinet Beau de Loménie

(57) **Abrégé**

L'invention a rapport à un bouchon de sécurité (1), comprenant un corps de bouchon (10), un capuchon (20), et une vis de verrouillage (30). Le corps de bouchon (10) présente un filetage autour d'un axe central (X) pour coopérer avec un filetage complémentaire, et un orifice taraudé (14) excentré par rapport à l'axe central (X). Le capuchon (20) est monté sur le corps de bouchon (10) et présente un orifice traversant (24) excentré par rapport à l'axe central (X) de manière à pouvoir être aligné avec l'orifice taraudé (14) du corps de bouchon (10) par rotation, autour de l'axe central (X), du capuchon (20) par rapport au corps de bouchon (10). La vis de verrouillage (30) est apte à être vissée et dévissée partiellement, dans l'orifice taraudé (14) du corps de bouchon (10), entre une position saillante dans laquelle une extrémité externe (31) de la vis de verrouillage (30) pénètre dans l'orifice traversant (24) du capuchon (20) pour solidariser le capuchon (20) au corps de bouchon (10), et une position enfoncée dans laquelle la vis de verrouillage (30) n'atteint pas l'orifice traversant (24) du capuchon (20), le capuchon (20) étant alors libre en rotation, autour de l'axe central (X), par rapport au corps de bouchon (10).

## Description

### Domaine Technique

La présente description concerne le domaine technique des bouchons de sécurité, destinés à éviter une ouverture accidentelle ou malveillante, et en particulier mais pas exclusivement l'accès malveillant à des connecteurs électriques ou optiques destinés à la transmission de données.

### Technique antérieure

Des bouchons de sécurité de différents types ont été proposés pour un large éventail d'applications, notamment le conditionnement de médicaments ou produits toxiques, mais aussi la sécurité de circuits comme par exemple des circuits de gaz ou des circuits de transmission de données.

Certains bouchons de sécurité, comme ceux divulgués dans les brevets US 4,775,061 et FR 2 763 316, et dans la publication de demande de brevet US 2021/0247013 A1, comprennent un corps de bouchon avec un filetage autour d'un axe central pour coopérer avec un filetage complémentaire, et un capuchon monté sur le corps de bouchon, monté libre en rotation autour de l'axe central. Dans ces bouchons de sécurité, comme le capuchon cache le corps de bouchon et ne permet pas de transmettre un mouvement de dévissage au corps de bouchon, le bouchon ne peut être ouvert que par un outil spécial accédant à une empreinte complémentaire sur le corps de bouchon à travers un orifice traversant central dans le capuchon. Toutefois, la sécurité offerte par ces bouchons de sécurité, en particulier face aux accès malveillants, reste limitée, puisque l'orifice traversant central dans le capuchon permet de facilement observer l'empreinte sur le corps de bouchon, et qu'il suffit alors d'obtenir un outil adapté à cette empreinte pour ouvrir le bouchon.

Dans d'autres bouchons de sécurité similaires, une manipulation spécifique peut rendre le capuchon solidaire du corps de bouchon en rotation autour de l'axe central, pour permettre le dévissage du bouchon en tournant le capuchon. Ainsi, dans le bouchon de sécurité divulgué dans le brevet EP 0 528 561 B1, un déplacement axial du capuchon par rapport au corps de bouchon permet de les rendre solidaires en rotation autour de l'axe central. Toutefois, la sécurité offerte par ce bouchon reste aussi limitée. Dans le bouchon de sécurité divulgué dans la publication de demande internationale de brevet WO 89/07076, une serrure à clé permet de solidariser le capuchon en rotation au corps de bouchon. Cette solution présente toutefois l'inconvénient d'une relative complexité mécanique, tout en présentant encore une certaine vulnérabilité aux accès malveillants, puisque la serrure reste directement accessible depuis l'extérieur. Finalement, dans la série de bouchons de sécurité commercialisée par la société Polamco Ltd. sous la référence PRC433TL, une vis pointeau reçue dans un orifice taraudé traversant le capuchon et excentré par rapport à l'axe central peut être serrée jusqu'à exercer une pression sur une surface du corps de bouchon, de manière à solidariser le capuchon par frottement avec le corps de bouchon. Toutefois, cette solution présente l'inconvénient que l'empreinte de la vis pointeau reste aussi toujours directement accessible de l'extérieur, ce qui limite la protection contre les accès malveillants.

### Exposé de l'invention

La présente description cherche à divulguer un bouchon de sécurité offrant une meilleure protection contre les accès malveillants, tout en restant mécaniquement simple.

Pour cela, selon un premier aspect, ce bouchon de sécurité peut comprendre un corps de bouchon, un capuchon et une vis de verrouillage. Le corps de bouchon peut présenter un filetage autour d'un axe central pour coopérer avec un filetage complémentaire, et un orifice taraudé excentré par rapport à l'axe central. Le capuchon peut être monté sur le corps de bouchon et présenter un orifice traversant excentré par rapport à l'axe central de manière à pouvoir être aligné avec l'orifice taraudé du corps de bouchon par rotation, autour de l'axe central, du capuchon par rapport au corps de bouchon. La vis de verrouillage peut être apte à être vissée et dévissée partiellement, dans l'orifice taraudé du corps de bouchon, entre une position saillante dans laquelle une extrémité externe de la vis de verrouillage pénètre dans l'orifice traversant du capuchon pour solidariser le capuchon au corps de bouchon, et une position enfoncée dans laquelle la vis de verrouillage n'atteint pas l'orifice traversant du capuchon, le capuchon étant alors libre en rotation, autour de l'axe central, par rapport au corps de bouchon.

Si, dans la position enfoncée de la vis de verrouillage, le capuchon est libre en rotation par rapport au corps de bouchon, son orifice traversant peut cesser d'être aligné avec la vis de verrouillage, laquelle ne sera donc plus directement accessible depuis l'extérieur. Une personne cherchant à accéder à la vis de verrouillage pour la dévisser partiellement, et ainsi solidariser le capuchon au corps de bouchon en rotation autour de l'axe central, devra alors d'abord tourner le capuchon jusqu'à réaligner son orifice traversant à la vis de verrouillage, avant même de pouvoir accéder à celle-ci. Cette opération, exigeant un temps et une connaissance supplémentaires, et donc difficilement exécutable de manière dissimulée représente un obstacle supplémentaire à un accès malveillant.

Afin d'empêcher que la vis de verrouillage puisse traverser entièrement l'orifice traversant du capuchon, un diamètre extérieur de la vis de verrouillage, en particulier un diamètre extérieur de filetage de la vis de verrouillage peut être supérieur à un diamètre intérieur de l'orifice traversant du capuchon. Ainsi, la vis de verrouillage ne pourra pas être extraite du bouchon de sécurité et y restera captive, empêchant ainsi sa perte ainsi que les éventuels dommages qu'une vis de verrouillage errante pourrait causer dans certaines applications, notamment aéronautiques ou militaires.

La vis de verrouillage peut en outre avoir une empreinte non-standard, exigeant ainsi un outil spécial pour son vissage et dévissage, ce qui représentera encore un obstacle supplémentaire à un accès malveillant, d'autant plus que, comme la vis n'est pas directement accessible ou même visible avant son alignement avec l'orifice traversant du capuchon, une personne cherchant à ouvrir le bouchon subrepticement ne pourra normalement pas connaître la forme de cette empreinte ni l'outil adapté à celle-ci avant d'avoir préalablement aligné l'orifice traversant avec la vis.

L'orifice taraudé du corps de bouchon, la vis de verrouillage et l'orifice traversant du capuchon peuvent notamment être sensiblement parallèles à l'axe central. Ainsi, l'orifice traversant du capuchon pourra déboucher sur une face avant du capuchon, facilitant l'actionnement de la vis de verrouillage par une personne autorisée équipée de l'outil approprié une fois celle-ci alignée avec l'orifice traversant. Toutefois, il est alternativement envisageable que l'orifice taraudé du corps de bouchon, la vis de verrouillage et l'orifice traversant du capuchon soient inclinés, voire perpendiculaires par rapport à l'axe central, et que l'orifice traversant débouche alors sur une surface latérale du capuchon.

Le filetage du corps de bouchon autour de l'axe central peut être un taraudage, c'est-à-dire un filetage interne. Ainsi, le corps de bouchon pourra être vissé sur une embase avec un filetage externe complémentaire, couvrant celle-ci. Toutefois, il est également envisageable que le filetage du corps de bouchon soit externe, de manière que le corps de bouchon puisse être vissé dans une embase avec un taraudage complémentaire. Dans ce cas, la paroi taraudée de l'embase pourrait être reçue entre le corps de bouchon et le capuchon, de telle manière que le capuchon couvre aussi l'embase.

Le capuchon peut comprendre en outre un point d'attache aligné avec l'axe central, par exemple pour l'attacher à l'embase à travers une chaîne ou lanière pour éviter la perte du bouchon après son ouverture.

Un deuxième aspect concerne un ensemble pouvant comprendre le bouchon de sécurité suivant le premier aspect susmentionné, et une embase avec le filetage complémentaire au filetage autour de l'axe central du corps de bouchon. Cet ensemble peut notamment comprendre en outre au moins un connecteur électrique ou optique à l'intérieur de l'embase. Ainsi, le bouchon de sécurité peut servir à éviter un accès malveillant à ce connecteur, notamment pour un piratage informatique.

Un troisième aspect concerne un procédé d'ouverture du bouchon de sécurité suivant le premier aspect susmentionné, ce procédé pouvant comprendre des étapes de rotation du capuchon, autour de l'axe central du corps de bouchon, jusqu'à alignement de l'orifice traversant du capuchon avec l'orifice taraudé du corps de bouchon et la vis de verrouillage, dévissage partiel de la vis de verrouillage de la position enfoncée vers la position saillante pour solidariser le capuchon au corps de bouchon, et dévissage du bouchon de sécurité par rotation du capuchon solidairement avec le corps de bouchon.

Un quatrième aspect concerne un procédé de sécurisation du bouchon de sécurité suivant le premier aspect susmentionné, comprenant une étape de vissage de la vis de verrouillage de la position saillante vers la position enfoncée pour désolidariser le capuchon du corps de bouchon en rotation autour de l'axe central, ainsi qu'éventuellement aussi la rotation du capuchon, autour de l'axe central du corps de bouchon, pour désaligner l'orifice traversant du capuchon par rapport à l'orifice taraudé du corps de bouchon et la vis de verrouillage.

### Brève description des dessins

L'invention sera bien comprise et ses avantages apparaîtront mieux, à la lecture de la description détaillée qui suit, de modes de réalisation représentés à titre d'exemples non limitatifs. La description se réfère aux dessins annexés qui sont schématiques et visent avant tout à illustrer les principes de l'exposé.

Sur ces dessins, d'une figure à l'autre, des éléments (ou parties d'élément) identiques ou équivalents sont repérés par les mêmes signes de référence. Sur ces dessins annexés :

[Fig. 1] La figure 1 est une vue en perspective d'un bouchon de sécurité suivant un premier mode de réalisation.

[Fig. 2] La figure 2 est une coupe axiale du bouchon de sécurité de la figure 1 dans le plan II-II, sur une embase avec un connecteur de transmission de données.

[Fig. 3] La figure 3 est une vue de détail de la vis de verrouillage en position saillante.

[Fig. 4] La figure 4 est une coupe axiale schématique d'un bouchon de sécurité suivant un deuxième mode de réalisation, avec un filetage externe, vissé dans une embase.

[Fig. 5] La figure 5 est une coupe axiale schématique d'un bouchon de sécurité suivant un troisième mode de réalisation, avec une vis de verrouillage orientée radialement.

### Description des modes de réalisation

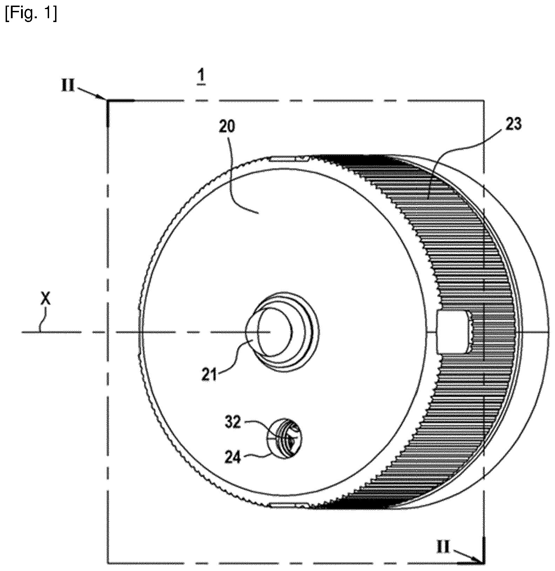

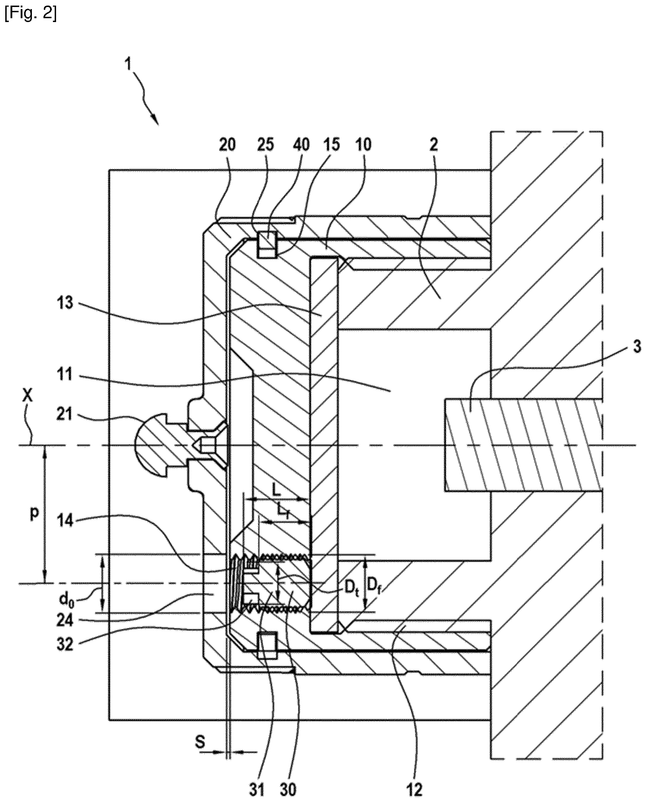

Comme illustré sur les figures 1 et 2, un bouchon de sécurité 1 suivant un premier mode de réalisation peut comprendre un corps de bouchon 10, un capuchon 20 et une vis de verrouillage 30. Le corps de bouchon 10 peut être destiné à être vissé sur une embase 2 afin d'y empêcher l'accès. Cette embase 2 peut par exemple recevoir un connecteur électrique 3, tel que par exemple un connecteur RJ45 ou USB, et/ou un connecteur optique, apte à la transmission de données. Ainsi, le bouchon de sécurité 1 peut permettre de sécuriser ce connecteur contre une connexion malveillante destinée par exemple à extraire de données confidentielles sans autorisation, ou à introduire des données faussées ou des logiciels malveillants.

Pour permettre le vissage du corps de bouchon 10 sur l'embase, le corps de bouchon 10 peut comprendre une cavité 11 ouverte vers une face arrière du corps de bouchon 10, avec une surface interne 12 taraudée, c'est-à-dire présentant un filetage interne autour d'un axe central X du corps de bouchon 10, pour coopérer avec un filetage externe 21 complémentaire sur l'embase 2. Un disque souple 13, par exemple en polysiloxane, destiné à former un joint hermétique contre l'embase 2, peut être disposée au fond de la cavité 11. Le corps de bouchon 10 peut en outre comporter un orifice taraudé 14 excentré par rapport à l'axe central X. Comme illustré sur la figure 2, cet orifice taraudé 14 peut être parallèle à l'axe central X et déboucher sur une face avant du corps de bouchon 10, à l'opposé de sa face arrière dans la direction de l'axe central X.

Le capuchon 20 peut être monté rotatif autour de l'axe central X sur le corps de bouchon 10, mais avec un déplacement axial nul ou restreint dans la direction de l'axe central X, de manière à éviter sa séparation du corps de bouchon 10. Le corps de bouchon 10 et le capuchon 20 peuvent par exemple être couplés axialement par une rondelle élastique 40 reçue dans des rainures annulaires 15, 25 complémentaires dans, respectivement, une surface externe du corps de bouchon 10 et une surface interne du capuchon 20. Le capuchon 20 peut recouvrir le corps de bouchon 10 sauf sur sa face arrière, afin d'empêcher l'accès au corps de bouchon 10 une fois que celui-ci est vissé sur l'embase 2. Le capuchon 20 peut notamment comporter un point d'attache 21 pour un lien (non illustré), tel qu'une chaîne ou lanière, destiné à maintenir le bouchon de sécurité 1 attaché à l'embase 2 même quand il est ouvert, et ainsi éviter sa perte accidentelle. Ce point d'attache 21 peut par exemple prendre la forme d'un têton retenu rotatif dans un orifice traversant du capuchon 20. La surface extérieure du capuchon 20 peut présenter un traitement antidérapant 23, comme par exemple un moletage droit ou croisé, pour faciliter sa préhension, notamment pour tourner le capuchon 20 autour de l'axe central X. Le capuchon 20 peut présenter en outre un orifice traversant 24, excentré par rapport à l'axe central X et disposé de manière à pouvoir être aligné avec l'orifice taraudé 14 du corps de bouchon 10 par rotation du capuchon 20, par rapport au corps de bouchon 10, autour de l'axe central X. Ainsi, dans l'exemple illustré sur les figures 1 et 2, l'orifice traversant 24 peut être aussi parallèle à l'axe central X et disposé à la même distance radiale r de l'axe central X que l'orifice taraudé 14 du corps de bouchon 10.

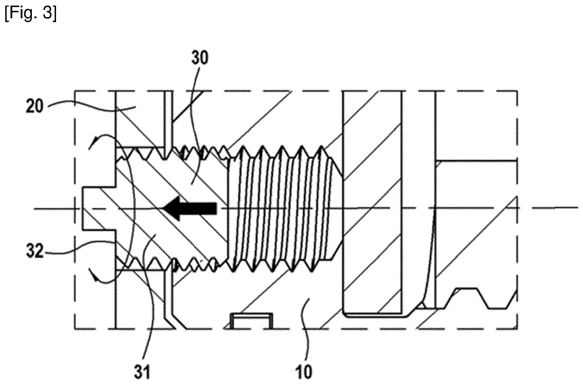

La vis de verrouillage 30 peut présenter un filetage complémentaire de celui de l'orifice taraudé 14 du corps de bouchon 10 de manière à pouvoir être vissée dans l'orifice taraudé 14. Une extrémité externe 31 de la vis de verrouillage 30 peut présenter un diamètre extérieur Dₜ inférieur au diamètre intérieur dₒ de l'orifice traversant 24 du capuchon 20, pour que cette extrémité externe 31 de la vis de verrouillage 30 puisse être insérée avec un jeu restreint dans l'orifice traversant 24 du capuchon 20, tandis que la vis de verrouillage 30 peut avoir une longueur totale L et une longueur filetée L_{f}, telle que la vis de verrouillage 30 puisse être vissée et dévissée partiellement, dans l'orifice taraudé 14, entre une position saillante, illustrée sur la figure 3, dans laquelle l'extrémité externe 31 de la vis de verrouillage 30 pénètre dans l'orifice traversant 24 du capuchon 20 pour solidariser le capuchon 20 au corps de bouchon 10 en rotation autour de l'axe central X, et une position enfoncée, illustrée sur la figure 2 dans laquelle la vis de verrouillage 30 n'atteint pas l'orifice traversant 24 du capuchon 20, le capuchon 20 étant alors désolidarisé en rotation, autour de l'axe central X, par rapport au corps de bouchon 10. D'autre part, le filetage de la vis de verrouillage 30 peut avoir un diamètre extérieur D_{f} supérieur au diamètre intérieur dₒ de l'orifice traversant 24 du capuchon 20, pour que la vis de verrouillage 30 ne puisse pas entièrement traverser l'orifice traversant 24 du capuchon 20, et reste donc captive dans le bouchon de sécurité. La longueur filetée L_{f} de la vis de verrouillage 30 peut par ailleurs être supérieure à la distance S séparant l'orifice traversant 24 de l'orifice taraudé 14 en direction de l'axe de filetage de la vis de verrouillage 30.

Afin de permettre le vissage et dévissage au moins partiel de la vis de verrouillage 30, celle-ci peut présenter, sur son extrémité externe 31, une empreinte 32 apte à être engagée par un outil adapté pour faire tourner la vis de verrouillage 30 autour de son axe central de filetage. Cette empreinte 32 peut notamment être une empreinte non-standard, de manière à ce que la vis de verrouillage 30 ne puisse pas être actionnée avec des outils couramment dans le commerce.

Le corps de bouchon 10, le capuchon 20, et la vis de verrouillage 30 peuvent être en un matériau métallique, par exemple de l'aluminium ou un alliage à base d'aluminium, du bronze ou de l'acier inoxydable. Toutefois, des matériaux non-métalliques, et notamment des polymères organiques, peuvent aussi être envisagés. En cas d'utilisation d'aluminium ou alliage d'aluminium, celui-ci pourrait recevoir un traitement de surface, par exemple à base de zinc-nickel, cadmium, nickel ou étain-zinc. En cas d'utilisation d'acier inoxydable, celui-ci pourrait pas exemple être brut, passivé ou nickelé.

Pour fermer le bouchon de sécurité 1, la vis de verrouillage 30 peut être initialement en position saillante, solidarisant ainsi le capuchon 20 et le corps de bouchon 10, comme illustré sur la figure 3. Le corps de bouchon 10 peut alors être vissé sur l'embase 2 en tournant le capuchon 20 autour de l'axe central X. Après avoir vissé le corps de bouchon 10, avec le capuchon 20, sur l'embase 2, jusqu'à serrer la bague souple 13 contre l'embase 2, le bouchon de sécurité 1 peut être sécurisé en vissant la vis de verrouillage 30 jusqu'à sa position enfoncée, comme illustré sur la figure 2, de manière à désolidariser le capuchon 20 du corps de bouchon 10 en rotation autour de l'axe central X. Dans cette position enfoncée de la vis de verrouillage 30, la rotation du capuchon 20 autour de l'axe central X non seulement ne servira aucunement à dévisser le corps de bouchon 10 de l'embase 2, mais déplacera en outre l'orifice traversant 24 du capuchon 20 hors d'alignement avec l'orifice taraudé 14 et la vis de verrouillage 30, cachant ainsi cette dernière.

Pour ouvrir le bouchon de sécurité 1 sécurisé ainsi, le capuchon 20 peut tout d'abord être tourné autour de l'axe central X du corps de bouchon 10, jusqu'à alignement de l'orifice traversant 24 du capuchon 20 avec l'orifice taraudé 14 du corps de bouchon 10 et la vis de verrouillage 30. La vis de verrouillage 30, dont l'empreinte 32 a ainsi été rendue accessible à travers l'orifice traversant 24, peut alors être partiellement dévissée, avec un outil approprié, de la position enfoncée vers la position saillante pour solidariser le capuchon 20 au corps de bouchon 10. Le bouchon de sécurité 1 peut alors être dévissé, par rotation du capuchon 20 solidairement avec le corps de bouchon 10, pour l'ouvrir et rendre ainsi accessible l'embase 2.

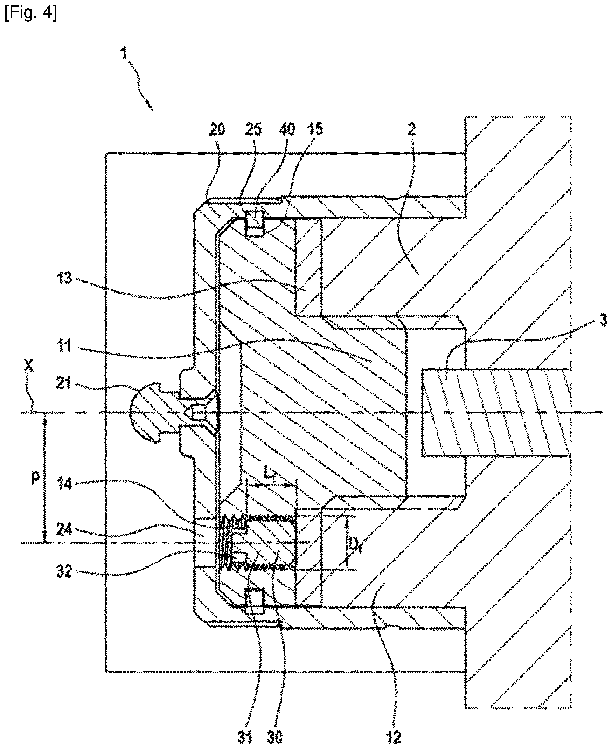

Quoique dans le mode de réalisation illustré sur les figures 1 à 3 le filetage du corps de bouchon 10 autour de l'axe central X soit un taraudage, c'est-à-dire un filetage interne, il est alternativement envisageable que ce filetage soit un filetage externe, comme dans le mode de réalisation alternatif illustré sur la figure 4. Dans un bouchon de sécurité 1 suivant ce deuxième mode de réalisation, le corps de bouchon 10 peut comprendre une surface externe 12' filetée autour de l'axe central X, de manière à permettre le vissage du corps de bouchon 10 dans une embase 2 avec un taraudage complémentaire. Le capuchon 20 peut être formé de manière à couvrir le corps de bouchon 10 et l'embase 2. Les éléments restants du bouchon de sécurité 1 de la figure 4 sont identiques ou analogues à ceux du bouchon de sécurité 1 des figures 1 à 3 et reçoivent en conséquence les mêmes signes de référence.

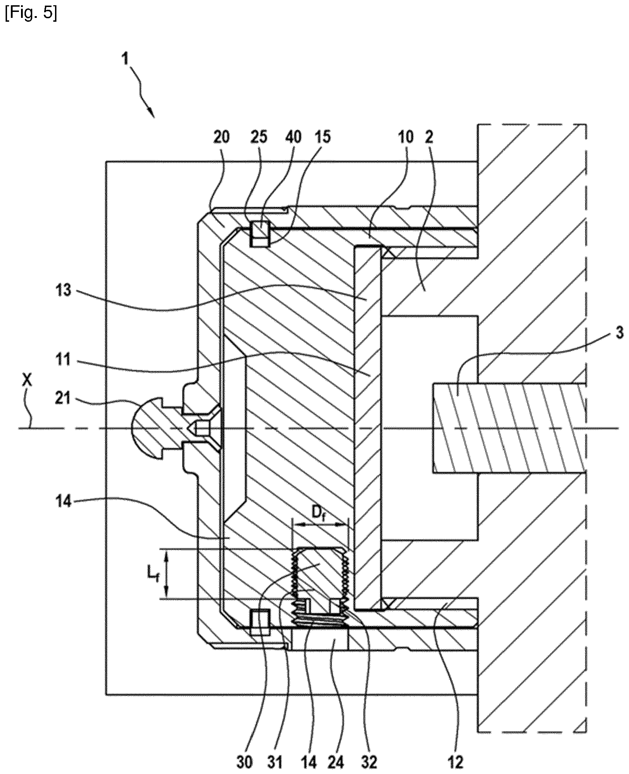

Quoique dans les modes de réalisation précédents l'orifice taraudé 14 du corps de bouchon 10, l'orifice traversant 24 du capuchon 20, et la vis de verrouillage 30 soient parallèles à l'axe central X, il est alternativement envisageable qu'ils soient inclinés par rapport à l'axe central X, voir perpendiculaires à celui-ci comme illustré sur la figure 5. Ainsi, dans ce troisième mode de réalisation, l'orifice taraudé 14 du corps de bouchon 10, l'orifice traversant 24 du capuchon 20, et la vis de verrou peuvent être orientés radialement par rapport à l'axe central X, l'orifice taraudé 14 et l'orifice traversant 24 débouchant alors sur des surface latérales respectives du corps de bouchon 10 et du capuchon 20. Les éléments restants du bouchon de sécurité 1 de la figure 5 sont identiques ou analogues à ceux du bouchon de sécurité 1 de la figure 1 à 3 et reçoivent en conséquence les mêmes signes de référence.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Bouchon de sécurité (1), comprenant :
un corps de bouchon (10), avec un filetage autour d'un axe central (X) pour coopérer avec un filetage complémentaire, et présentant un orifice taraudé (14) excentré par rapport à l'axe central (X),
un capuchon (20) monté sur le corps de bouchon (10) et présentant un orifice traversant (24) excentré par rapport à l'axe central (X) de manière à pouvoir être aligné avec l'orifice taraudé (14) du corps de bouchon (10) par rotation, autour de l'axe central (X), du capuchon (20) par rapport au corps de bouchon (10), et
une vis de verrouillage (30), apte à être vissée et dévissée partiellement, dans l'orifice taraudé (14) du corps de bouchon (10), entre une position saillante dans laquelle une extrémité externe (31) de la vis de verrouillage (30) pénètre dans l'orifice traversant (24) du capuchon (20) pour solidariser le capuchon (20) au corps de bouchon (10), et une position enfoncée dans laquelle la vis de verrouillage (30) n'atteint pas l'orifice traversant (24) du capuchon (20), le capuchon (20) étant alors libre en rotation, autour de l'axe central (X), par rapport au corps de bouchon (10).

2. Bouchon de sécurité (1) suivant la revendication 1, dans lequel un diamètre extérieur de la vis de verrouillage (30) est supérieur à un diamètre intérieur (dₒ) de l'orifice traversant (24) du capuchon (20).

3. Bouchon de sécurité (1) suivant la revendication 2, dans lequel le diamètre extérieur de la vis de verrouillage (30) supérieur au diamètre intérieur (dₒ) de l'orifice traversant (24) du capuchon (20) est un diamètre extérieur (D_{f}) de filetage de la vis de verrouillage (30).

4. Bouchon de sécurité (1) suivant l'une quelconque des revendications précédentes, dans lequel la vis de verrouillage (30) a une empreinte (32) non-standard.

5. Bouchon de sécurité (1) suivant l'une quelconque des revendications précédentes, dans lequel l'orifice taraudé (14) du corps de bouchon, la vis de verrouillage (30) et l'orifice traversant (24) du capuchon (20) sont sensiblement parallèles à l'axe central (X).

6. Bouchon de sécurité (1) suivant l'une quelconque des revendications précédentes, dans lequel le filetage du corps de bouchon (10) autour de l'axe central (X) est un taraudage.

7. Bouchon de sécurité (1) suivant l'une quelconque des revendications précédentes, dans lequel le capuchon (20) comprend en outre un point d'attache (21) aligné avec l'axe central (X).

8. Ensemble comprenant le bouchon de sécurité (1) suivant l'une quelconque des revendications précédentes, et une embase (2) avec le filetage complémentaire au filetage du corps de bouchon (10) autour de l'axe central (X).

9. Ensemble suivant la revendication 8, comprenant en outre au moins un connecteur (3) électrique ou optique à l'intérieur de l'embase (2).

10. Procédé d'ouverture du bouchon de sécurité (1) suivant l'une quelconque des revendications 1 à 7, comprenant les étapes suivantes :
rotation du capuchon (20) autour de l'axe central (X) du corps de bouchon (10), jusqu'à alignement de l'orifice traversant (24) du capuchon (20) avec l'orifice taraudé (14) du corps de bouchon (10) et la vis de verrouillage (30), dévissage partiel de la vis de verrouillage (30) de la position enfoncée vers la position saillante pour solidariser le capuchon (20) au corps de bouchon (10), et
dévissage du bouchon de sécurité (1) par rotation du capuchon (20) solidairement avec le corps de bouchon (10).

11. Procédé de sécurisation du bouchon de sécurité (1) suivant l'une quelconque des revendications 1 à 7, comprenant une étape de vissage de la vis de verrouillage (30) de la position saillante vers la position enfoncée pour désolidariser le capuchon (20) du corps de bouchon (10).
